# EUROPEAN PATENT SPECIFICATION

(11) **EP 1 535 455 B1**
(45) Date of publication and mention of the grant of the patent: **07.12.2011**
(21) Application number: 03747960.7
(22) Date of filing: 04.09.2003
(51) Int. Cl.: H04M 15/00, H04L 12/14

(54) **METHOD FOR IP-BASED CORPORATE TELEPHONE PLATFORM BILLING**
VERFAHREN ZUR IP-BASIERTEN TELEFONPLATTFORMABRECHNUNG
PROCEDE DE FACTURATION DE PLATE-FORME TELEPHONE PRIVE

(30) Priority: 06.09.2002 IT TO20020774
(43) Date of publication of application: 01.06.2005
(73) Proprietor: Telecom Italia S.p.A., 20123 Milano (IT)
(72) Inventor: APICELLA, Laura, I-10148 Torino (IT); MATTONE, Paolo, I-10148 Torino (IT); MELLI, Isabella, I-10148 Torino (IT); SASSI, Massimo, I-10148 Torino (IT)
(74) Representative: Battipede, Francesco
(86) International application number: PCT/EP2003/009806
(87) International publication number: WO 2004/023778

(56) References cited:
- EP-A- 0 876 047
- WO-A-00/22792
- WO-A-03/021847
- US-A1- 2001 056 362
- US-A1- 2002 038 364
- US-A1- 2003 016 798
- BUCHHOLZ D ET AL: "TRANSPARENZ BEI DEN KOSTEN FUER SPRACH- UND DATENDIENSTE DURCH DEN ELECTRONIC BILLING INFORMATION SERVICE" UNTERRICHTSBLATTER, DEUTSCHE TELEKOM, HAMBURG, DE, vol. 54, no. 4, 10 April 2001 (2001-04-10), pages 224-227, XP001020273 ISSN: 0942-7287

## Description

The invention refers to telecommunication systems intended for corporate use, and particularly to those currently known as "IP corporate" telephone systems. Such systems are tending to replace traditional corporate telephone systems implementing PABXs (Private Automatic Branch Exchanges) in platforms which:
- implement telephone services over the corporate IP-based (Internet Protocol) data exchange network,
- make the intracompany communication system capable of offering innovative voice-data integrating services for promoting co-operative work oriented applications, and
- ensure considerable savings in terms of infrastructure management and the cost of calls between remote company sites via data links on a respective Wide Area Network (commonly called WAN).

Interesting reference can be made to WO-A-02/43406 for a general description of the structure and operating criteria of a system of this kind.

Traditional switchboards are replaced in systems of this kind by a call controlling server which are capable of managing calls, additional services and user profiles, and which contain a database for full system configuration. Although evolution is still in progress, some innovative IP-based corporate telephone platforms currently allow rather robust and reliable solutions, suitable for companies of various sizes. Consequently, it is increasingly common to find the two technologies (traditional and IP) interworking in a situation characterised by gradual transition, whereas new companies can set up a single integrated voice-data network from the start.

Administrators employ specific tools for monitoring traffic generated by extensions, document the calls made, evaluate costs, detect malicious attempts and congestion due to saturated resources in traditional corporate telephone systems (at least in the more complex and evolved systems).

Backed up by the data made available in this way, corporate managers can control the service both technically and administratively, dimension growth by appropriately allocating new resources and proportionally distribute costs across the various departments according to the actual use of the system.

These management systems are generally provided by the switchboard manufacturers and are adapted to the specific context of the company where the system is set up. This adaptation specifically refers to national/international numbering plans and rates applied by telecommunication carriers providing connections to the outside world. On call cost level, some systems are capable of formulating budget estimates with a certain degree of approximation.

The need for systems capable of providing data for technically and administratively controlling the service also arises in relation to IP-based telephone platform management.

Software applications based on predetermined numbering plan call classification (e.g. the North American Numbering Plan, or NANP) and cost modelling according to predefined rates for each type of call exist for this purpose today. The configuration margins offered to system administrators to adapt systems to specific practical contexts are not sufficient to permit use in a corporate network scenario with PSTN (Public Switched Telephone Network) and WAN links. This is because these links are often very variable in terms of number (e.g. due to the increased number of sites) and typologies (changes in providers, rates, rates according to use, etc.). They may become considerably different from those predetermined at an earlier stage and are in continuous evolution within the corporation.

Patent WO-A-00/72571 refers to a similar application context and describes a system for billing calls in an IP-based network. This system is used to bill the cost of calls to the calling number, and checks are run while the call is being placed to verify that the parties are enabled to receive this service. Furthermore, the called party can choose either to accept or refuse the call. The system deals with billing if the call is accepted.

Another known system is described in patent EP-A-1 117 232. This system is capable of providing (upon request) a report on the causes of trouble perceived by the user during an IP-based call. The user interacts with the system via a Graphic User Interface (GUI).

This system only identifies the causes of telephone system trouble following the user's request and generates reports only relating to this aspect of system operation.

The need is felt for a tool which is capable of:
- efficiently documenting full-IP calls (i.e. calls over IP only), including in-site calls, between-site calls and calls to traditional terminals (external calls),
- correctly classifying calls according to the numbering plan of the country where the call originates considering all internal numbering plans,
- billing all calls according to type (in-site, between-site, external) and other rates applied by the involved carrier(s), and
- monitoring system performance and quality of service (Qos).

The basic problem is related to the possibility of offering flexible configuration capacity in a single system capable of calculating the costs of both telephone network calls and data network calls. As mentioned, the solutions known to date are generally based on call classification according to predetermined numbering plans and on cost modelling derived from predetermined rates for all types of calls (generally voice) without considering the incidence of IP-based telephone calls on between-site data link costs. This factor is particularly relevant in the case of links billed according to use.

Specifically, the need is felt for a flexible tool which is capable of documenting traffic, managing a very high number of call classes - considering both "on net" calls which are completed entirely on the data network and calls also comprising a PSTN segment (i.e. "off net" calls) - and applying also very complex rate algorithms for calculating billing costs such as those characterising telephone and data service contracts offered by various carriers. All this with the possibility of efficiently backing up administrators in system performance monitoring, indicating criticalities and the need to re-dimension resources.

The object of the invention is to satisfy this need.

The object is reached according to the invention by a system whose characteristics are specifically recited in the annexed claims.

The system according to the invention is capable of satisfying the need outlined above, ensuring configurability of corporate sites, telephone numbering plans, telephone rates and WAN-based data service rate (both "flat", and charged according to use).

Particularly, the system according to the invention presents the following advantages.

Firstly, it can be adapted to various IP-based corporate telephone system architectural solutions. It can be adapted to various company models either concentrated in a few sites or extensively distributed even on an international level. The system according to the invention is capable of managing many numbering plans at the same time according to geographic collocation and choices implemented by customers (e.g. internal numbering groups). Additionally, it is capable of processing generated call data from one or more call controlling servers, according to the specific architecture of the IP-based corporate telephone platform (by processing centralised/distributed call types).

Secondly, the system according to the invention offers full basic parameter configurability for documenting calls and calculating costs. Particularly, the administrator can configure a wide range of call classes in relation to internal company numbering groups (in-site and between-site) and to external numbering plans according to national context and conditions established by carriers providing PSTN and WAN data telephone services. Furthermore, the solution according to the invention can be used to calculate call costs by applying rate coefficients capable of reflecting contractual conditions specifically applied by carriers, according to duration and classification. This refers to tables contained in the application database which can be updated by the administrator.

Additionally, the solution according to the invention offers the possibility to calculate the part of call costs referred to the traditional telephone network (PSTN) and the part referred to WAN data link. Particularly, cost evaluation and application of telephone rates pertaining to links to one or more PSTN networks is possible, along with WAN data service cost determination and rate application ("flat", or charged according to use) for calls over this type of network.

The invention will now be described, by way of nonlimiting example only, with reference to the annexed drawings wherein:
- figure 1 is a functional block diagram illustrating the general architecture of a system according to the invention,
- figure 2 is a block diagram graphically illustrating the characterising elements of an example of embodiment of a solution according to the invention,
- figure 3 shows the operative steps required to configure a system according to the invention, and
- figure 4 illustrates the operative steps of the data processing phase in the context of a system according to the invention.

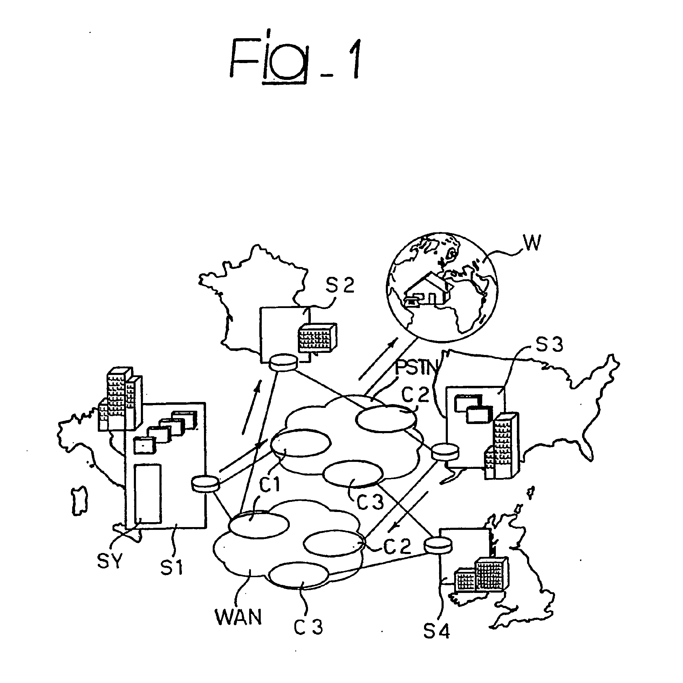

The diagram shown in figure 1 illustrates a possible example of a company where a system according to the invention, generally indicated by reference SY, is implemented. The company has several sites (e.g. four), of different sizes, in different countries, only two of which are equipped with a cluster of call controlling servers. Each site can exploit telephone and data links services via one or more chosen carriers.

In other words, a typical mixed IP-based telephone platform architecture is described.

The company illustrated in figure 1 is, in general, a company with several sites located in the territory and a main site S1 (where we suppose the system according to the invention is mainly located, although this is definitely not mandatory), with the presence of a cluster of call managing servers capable of processing calls also for smaller sites, such as those indicated by references S2 and S4.

The presence of sites (such as that indicated by reference S3) equipped with an additional call controlling server cluster may be envisaged. One or more PSTN networks for calls directed to the external world must be accessed from each site, while between-site calls are generally managed over a data WAN. It is supposed that both the PSTN or PSTNs and the WAN are based on the infrastructures of one or more different carriers, generically indicated by references C1, C2, C3, etc. The coincidence of symbols adopted to indicate the PSTN and WAN carriers is merely for the sake of simplicity of drawings: technical experts of the sector will understand that there are no limits with reference to this matter.

The rates of the carriers, with whom contracts (which may be different for different sites) are stipulated, are applied to the various types of calls.

As already mentioned, it is hypothesised that the system SY according to the invention is primarily located in the company's primary site S1. Preferably it is installed on a computer which is capable of working in such a scenario by connecting (preferably when the traffic is low, e.g. at night) to the databases of all the call managing server clusters located in the various sites. The system retrieves call details, documentation on data traffic associated to all inbound/outbound calls to/from the company during a certain period, e.g. during the previous day. The retrieved data is later processed and used for reporting.

In order to be used in a context generically illustrated in figure 1, the system application according to the invention preferably presents a configuration phase in which the system administrator characterises the installation according to the physical and logical specifications of the company sites. Each site is characterised by a number of internal references and by external references which ensure collocation in public networks. According to the references, the system SY can classify calls originated by network terminals as follows:
- internal calls within the site (in-site calls),
- calls to other company sites (between-site), and
- external calls to parties reached via PSTN network(s), e.g. to the "rest of the world" W.

In order to be used in any country and - in general - in companies whose sites are located in different countries, one or more external numbering plans (also one for each site), according to which all outbound PSTN calls are classified, can be defined in the system SY. The detailed classification is functionally based on the various rates applied by the chosen carriers.

For example, with reference to Italy and to the carrier Telecom Italia detailed classification comprises the following types of calls (note that similar criteria apply to other carriers and/or other countries):
- district calls (same district code of the caller),
- inter-district calls (other district codes in the country),
- international calls (with reference to various country sub-groups), and
- calls to mobile terminals.

These primary classes can be preferably integrated by defining special cases of numbers for which special rates are applied. For example, some carriers apply discounts for calls to the most frequently dialled numbers or regional calls.

The system SY provides an additional configuration level for detailing one or more billing plans for outbound PSTN calls (also one for each site) according to which the cost of each call can be computed. Consequently, a billing parameter to be articulated according, for example, to the day of the week or time of the day (i.e. according to time), can be included in the configured numbering plan in these cases.

Finally, the system SY is capable of billing between-site calls over the WAN data network only. Also in this case, considering the scenario illustrated in figure 1, different rates can be included according to the contract and/or the WAN data service carrier. To provide increased flexibility, different rates can be determined for calls whose destination sites are different, despite being originated in the same site. This possibility is useful if a site is not linked to all the others by the same carrier and in which different carriers are chosen for different routes (for reasons of cost-effectiveness or other). Essentially, a different rate can be entered for each source/destination site (e.g. per transmitted/ received megabyte). Preferably, data referred to yearly subscriber fees and possible monthly subscriber fees can be entered for "flat rate" type contracts. This is more useful for budgeting rather than computing the billing costs of each call.

In all cases, the system SY is capable of retrieving data from all call controlling servers in the various sites to generate and provide a comprehensive overview of corporate telephone traffic.

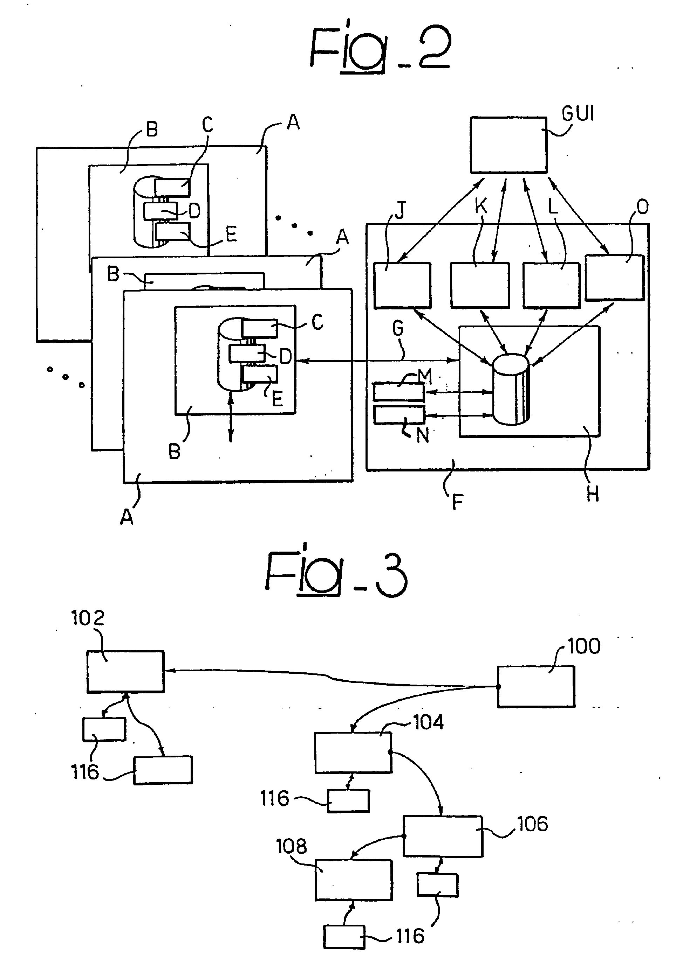

For this purpose, as shown in figure 2, the call controlling or managing server, indicated with reference A, mainly comprises a telephone platform database B containing:
- detailed data C on calls,
- data D on data traffic associated to calls, and
- data E referred to users and their IP devices associated to respective data, such as IP address, telephone number, etc.

Figure 2 shows that the structure of server A can be duplicated and be present in other company sites; this is especially the case of medium sized companies capable of hosting a dedicated call managing server cluster.

On system node F level, an element G for retrieving raw data on calls on the IP-based telephone system and a database H where the retrieved data are organised and processed.

A GUI (Graphic User Interface) is provided characterised by the following:
- a first interface J for configuring the company sites,
- a second interface K for configuring the numbering plans, and
- a third interface L for configuring voice and data billing plans.

A module M for classifying calls is also provided to divide the calls into types according to the entered numbering plans. An additional value module N is employed to determine the rates of the calls, i.e. for computing the respective costs. This relates to both data calls and voice calls with reference to the entered billing plans. Finally, reference O indicates one or more modules for creating generic and/or detailed reports which can be accessed by the system administrator.

The system SY consequently implements the GUI which can be used to configure the various company sites S1, S2, S3, S4, defining the values of the respectively associated parameters and entering the required numbering and billing plans following predefined guidelines to simplify work.

Documented call classification results from raw data processing. Processing firstly involves analysing the called number and dividing calls according to the source site of the call. Then, the called number is analysed for each group of calls from each site, according to the group to which the number belongs, as configured in the numbering plan of the site, and the call is allocated to a class: internal (namely in-site or between-site) or external (namely district, inter-district, international, etc.).

The data analysis process referred to day, time and duration of external calls is then used to bill calls according to the billing plans entered in the system on configuration level and containing differential costs for the various classes.

An additional data analysis process concerns the data stored on call managing or controlling server(s) referred to data calls between companies (made between sites over the WAN without using PSTN networks). The process analyses all data referred to these calls, with particular reference to the quantity of bytes generated and transmitted by each terminal. This process has the two-fold purpose of providing billing information on the calls according to the amount of transmitted bytes (instead of time) and collecting useful data for more detailed generated traffic analysis.

The initially configured plans can be edited or changed many times, simply and flexibly according to needs, for classifications and billing purposes.

All data processed as described above are then made visible to the user by means of a number of reports which are differentiated according to the information to be obtained. The data periodically retrieved from each system are processed and aggregated to view data globally and referred to each site.

The diagram in figure 3 is essentially a flow diagram illustrating the configuration and initial processing phase of the data in the context of a system according to the invention.

Specifically, the step indicated by reference number 100 indicates the configuration data definition referred to:
- company sites and link methods (step 102),
- numbering plans (step 104), and
- voice and data billing plans (step 106).

Reference number 108 indicates the step corresponding to the entered billing plan validation and verification process.

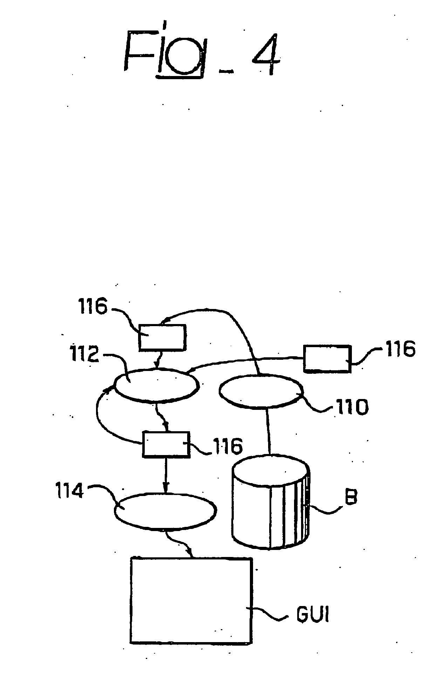

With reference to the processing phase itself (figure 4), reference number 110 indicates the step in which the raw data are retrieved from the IP-based telephone platform, while reference number 112 generally indicates a call and voice classification process and a data billing process. Reference number 114 indicates the creation of reports for the platform manager.

Reference number 116 indicates the steps in which the variously involved modules write/read the acquired information to/from the system database (indicated with reference H in figure 2).

Figure 4 expressly highlights the interaction with the database B (step 112) and the graphic user interface GUI (step 114).

A number of parameter values must be defined during system configuration with reference to the information on company sites to be acquired and the reciprocal linking methods, namely, for example:
- the site name, with identification data and validation criteria,
- indications on voice router/gateway, considering that no IP addresses can be duplicated in the table,
- the internal numbering plan (telephone numbers used in each site, checking that no number belongs to more than one site in the table),
- the internal IP-addresses (also in this case checking that no addresses belong to more than one set in the table), and
- the numbering and billing plan to be used (e.g. with reference to different countries, checking that the numbering and billing plan is not previously configured in the system).

Acquisition method of data to be acquired and acquisition methods referred to numbering plans is hierarchic and sorted.

Each plan consists of a sorted sequence of rules and each rule is a logical sum (OR) of classification criteria. Each classification criterion comprises one or more adaptation criteria or Called Number Matches (CNM). The CNMs are identified by self-explanatory IDs according to call type and to ID.CNM-criterion-value triads in general.

The ID.CNM generically indicates a call type classification ID (external, internal, mobile, etc.).

The expression "criterion" generically expresses one of the following values:
- length (the number of digits of the called number must be at least equal to the stated value),
- total length (the number of digits of the called number must correspond exactly to the value),
- equal to (the called number must start with a code = value string),
- fully equal (the called number must be exactly equal to value), and
- the called number string must match with the regular indicated expression.

The value field indicates a corresponding string of binary digits.

After configuring the company sites (step 102) and the numbering plan for each site (step 104), the billing plan for PSTN calls (voice rates) and WAN calls (data rates) must be defined.

Voice rates are linked to the numbering plan acquired in step 104. The associated rates can be entered for each previously defined criterion. Usually, the rates are expressed by a simple triad (day, rate starting time and rate ending time) and costs are expressed by a pair (rate per minute, units).

Data rates on the other hand are linked to the structure of the site where they are entered (step 102). Each data billing plan comprises data to illustrate the reality of each company (which may comprise several sites) where the system SY is installed and configured.

The illustration is consequently equivalent to a square matrix whose size can be varied during configuration and whose axes show the list of the currently configured sites. Each crossing point in the matrix shows the two rates for transmitted megabyte and received megabyte to be applied for data from the call source site to the call destination site. Information referred to data rates from a site to all the other sites can be entered in each row of the table. Cardinality of this quantity is consequently always equal to the square of the site location.

Preferably, cost data referred to yearly and/or monthly subscriber fees can be entered.

The validation and verification process of the entered billing plans is carried out in step 108. The purpose is to explicate information entered in billing plans, validate the information and clearly indicate any incoherence or omissions. Incoherence may be reported if there is no billing plan for some periods in a week or if more than one rate has been configured.

In step 108, a table indicating the times of the day on the abscissa and the days of the week of the ordinate may be used. Granularity (i.e. discretion) of the rates in time may correspond to one minute. Entered and validated rate values in each time window (e.g. corresponding to one minute) in which the week is subdivided are shown, offering the following possibilities:
- no value in specific time window,
- two values in a specific time window, or
- entered value.

A warning in text format for each entered rate time helps to identify anomalies. Respecting billing is possible even if the billing plan is not validated. Obviously, the results will be partial or not predictable if referred to certain time windows in which the billing plan is either not defined or defined twice.

During raw data retrieval from the IP-based telephone platform (step 110 in figure 4) the system SY retrieves data related to calls, users and devices from the call managing system database B to create call documenting records to be stored in the database H.

According to the data retrieved from B, the system SY generates records containing, for example:
- detailed call data such as, for example, caller's number, called number, date and time of start of call, date and time of end of call, calling terminal IP address (corporate gateway address in the case of calls originating outside), called terminal IP address (which in the case of calls to PSTN is the address of one of the corporate gateways), duration of the call, data concerning traffic associated to the calls, such as number of transmitted and received bytes;
- information related to users and associated devices, such as user's ID, user's name, telephone number, associated telephone number, associated device.

The specific method with which the data are retrieved or can be retrieved from the call managing server and/or from other apparatuses/elements in the platform depend on the specific characteristics of the IP-based telephone platform.

The call classification process carried out in step 112 consists of a sequence of operations aimed at classifying calls. These operations can be grouped into two main phases, namely internal corporate network call billing and external call billing.

Reference is usually made to configuration data corresponding to site data and rates (defined in step 102) and to the external billing plan (defined in step 104) in these two main phases.

Site data and rates usually comprise information related to:
- name of the site (for identification in the database and reporting purposes),
- internal numbering plan (for defining the source site of the call and for establishing whether the call is internal, between-site - specifying destination site in this case - or external),
- list of IP addresses (to identify the source site of the call in the case of calls for which a specific calling number is not specified and in the case of calls made using teleconference functions or the like),
- corporate voice router gateway addresses (for identifying inbound calls from outside to be ignored by the billing process or accounted for a zero cost calls), and
- numbering and billing plan to be used for outbound/external calls from the site.

Various actions are then conducted on call classification levels.

Inbound calls (identified by coming from one of the corporate voice gateways) are classified as "inbound" and not billed.

For outbound calls, on the other hand, the source is identified according to the caller's number or the source IP address and site data entered during configuration (step 102).

Furthermore, the system determines whether the calls is internal (in-site) or between-site. This is usually conducted according to the called number of other configuration data to identify the destination site of the call.

Between-site calls are billed according to the plans defined in step 106 usually by applying the WAN rates. The call cost is determined according to the data on the traffic generated by the call and on the base of data related to data call billing. Application of rates related to data-connection between sites is applied, for example, in this way.

Calls which are neither in-site nor between-site are directed outside the company. This criterion is obviously applied to calls in which the called number does not belong to a numbering plan configured in the system. Usually an additional verification is conducted to ensure that the call is an external call by checking the presence of the module to be selected to place external calls. External calls rates are classified in detail according to the rate numbering plates entered in steps 104 and 106.

External call classification consists in applying classification rules generally configured in step 104. Each criterion is translated into regular expressions by a suitable correspondence.

Specifically, the rules acquired in the numbering plan are scanned in order (from the first to the last) and each criterion is compared (by means of logical sum, OR) in the order in which they appear until an application criterion is found. The method continues with the next rule when a criterion is applied.

The classification method continues with the next rule if no criteria are applicable. The call is classified after the rule scanning process. A partial call classification will be rendered if a terminal rule is not applied. This phenomenon can be handled by the system configuration by adding a terminal rule.

After being classified, calls are billed as shown in the second part of step 112.

This occurs starting from external calls and then goes onto between-site calls.

Voice calls are billed according to the duration of call starting from when the call is placed.

Useful billing process data for external calls includes:
- definition of billing time of the call,
- duration of the call in seconds and
- identification of billing plan to be applied.

Defining factors for internal between-site calls are:
- number of transmitted bytes,
- number of received bytes,
- identification of billing plan to be considered according to source site,
- determination of rate to be applied according to source site/destination site association for each call.

As mentioned, the system preferably starts from external calls which are preferably subdivided according to source site. The corresponding classifications and the rate associated to the respective class according to the billing plans configured in step 106 are identified for each external call from a certain site.

Between-site calls are then billed considering that contracts may be flat rate or mixed, also in this case according to the configuration data entered in step 106.

The method then evaluates the cost of calls due to the generated traffic if rates are determined according to use. In this case, the method must account for the fact that, unlike external calls, information on the source site is not particularly relevant for attributing costs. This is because, in this case, data is exchanged between sites and the cost related to the amount of transmitted and received data, as defined by the service carrier, is attributed to each site,; consequently each call is charged both to the source site and to the destination site. Therefore, the method identifies the two sites involved in the call and the amount of exchanged data for billing. The costs to be attributed to each of the two sites according to the number of transmitted and received megabytes and the costs are evaluated for each call.

Usually, data referred to yearly subscriber fees and monthly subscriber fees (where relevant) for flat rate contracts can be entered in addition to rates according to use. These data are more useful to evaluate the incidence of voice traffic on data link costs rather than for calculating the costs of single calls. The total amount of voice traffic generated on a certain link over a certain time can be evaluated by summing the number of megabytes due to all calls under the link in the concerned period. Subsequently, the total traffic which has concerned the link in the concerned period of time (by using currently employed monitoring tools of the known type) is determined and the percentage referred to between-site calls is defined. After defining the percentage of calls under the network, the cost allocated to this type of traffic (which is consequently proportional to the previously calculated percentage of use of the link) can be determined from the subscriber fee. In the case of contracts in which an additional amount is charged with respect to the normal monthly subscriber fee to be paid also for voice traffic, this value is stored and during cost report viewing referred to a site for a certain period of time, the relative amount is calculated according to the duration of the considered time by summing it to the previously computed value.

Consequently, part of the cost of data calls depends directly on band consumption (for rates according to use) and is considered to attribute a cost to each call. Usually, part of the cost is attributed to the site from where the call is placed and part is attributed to the site to which the call is directed (which normally occurs in the case of data traffic exchange between two sites). Additional costs due to monthly and/or week subscriber fees, which do not contribute to the cost of each call but which determine the expenditure pertaining to the use of data links for between-site telephone services, are added to these costs (if present).

At least three different classes of reports are preferably offered in step 114, in which reports are generated- for the system administrator for technical-administrative purposes and for other users to control the cost of their calls, with reference to the following addressees, namely:
- single user;
- site manager (with possibility of defining groups of users are virtual sites on an additional level of detail), and
- system administrator.

Generally single users can view only the administrative reports related to call made from their own terminal. The site manager can access all the documentation and statistics referred to the site and the administrator can access all reports.

The reports can be written according to different criteria (in ways which are intrinsically known).

Firstly, detailed reports can be generated in which the following information is provided for each call, for example: caller's number, called number, connection starting time, source IP address, destination IP address, duration, source site, destination site, name of user placing the call, type of call (external, internal, between-site or in-site), cost.

More general reports can be generated by aggregating typologies indicated during request. Consequently, it may be possible to choice reports sorted by the following, for example:
- by cost: calls are sorted according to cost; a report typically containing the following information is provided for each call: caller's name, type of call, duration, cost, called number and number of exchanged bytes (the latter for between-site calls);
- by duration: calls are sorted according to duration; a report typically containing the following information is provided for each call: caller's name, type of call, duration, cost, caller's number, called number and number of exchanged bytes (the latter for between-site calls);
- by typology: calls are sorted according to typology; a report typically containing the following information is provided for each call: caller's name, type of call, duration, cost, caller's number, called number and number of exchanged bytes (the latter for between-site calls);
- by traffic (for between-site calls only): calls are sorted according to amount of exchanged data; a report typically containing the following information is provided for each call: caller's name, type of call, duration, cost, caller's number, called number and number of exchanged bytes; and
- by user: calls are sorted according to user; a report typically containing the following information is provided for each call: caller's name, type of call, duration, cost, caller's number, called number and number of exchanged bytes (the latter for between-site calls).

Aggregated view is possible showing the reports of the type above referred to all the calls made from each site in the company or referred to a single site in which only the reports referred to one site are shown. Short reports for each site and each user can also be obtained indicating the total cost of calls considering the incidence of subscriber fees entered during data billing process definition (step 112) for data calls. Furthermore, raw data contained in databases B and C may be viewed, i.e. detailed data on calls and data traffic associated to calls.

The description above illustrates how the system according to the invention is fully flexible in terms of basic parameter configuration for documenting calls and calculating costs (sites, numbering plans, billing plans, verifying entered data), to evaluate the costs associated to calls on the traditional network (PSTN) and for the use of WAN data links, whereby allocating costs also to the data part. The system according to the invention can be adapted to various architectural solutions and different IP-based corporate telephone platforms.

Naturally, numerous changes can be implemented to the construction and embodiments of the invention herein envisaged without departing from the scope of the present invention, as defined by the following claims.

## Claims

1. System for billing communication costs referred to a corporate telecommunications network located in a plurality of sites (S1, S2, S3, S4), said corporate network comprising:
- an interface function (A) with at least one external Public Switched Telephone Network,
- a data Wide Area network capable of supporting voice calls in IP-based mode, and
- a database (B) for collecting data (C, D, E) referred to calls via said interface function (A) and calls on said data Wide Area network),
the system being **characterised by** the fact that_it comprises:
- at least one Graphical user interface for selectively producing first configuration data (J) pertaining to said sites (S1, S2, S3, S4), second configuration data (K) pertaining to numbering plans for placing said calls, and third configuration data (L) pertaining to billing plans for said calls; said first, second and third configuration data pertaining both to voice calls and to data calls,
- a classification module (M) for dividing the calls according to numbering plans corresponding to said second configuration data (K) according to said first configuration data (J) pertaining to said sites (S1, S2, S3, S4),
- a value module (N) for calculating the costs of said calls with reference to the billing plans corresponding to said third configuration data (L), (J) pertaining to said sites (S1, S2, S3, S4) and to said second configuration data pertaining to said numbering plans, and
- a report generating module (O) for generating reports pertaining to costs of communications placed over said corporate communications network determined by said value module (N), said reports transparently referring both to voice calls and to data calls.

2. System according to claim 1, **characterised by** the fact that it comprises a respective database (H) for storing said first (J), second (K) and third (L) configuration data.

3. System according to claim 1 or 2, **characterised by** the fact that said classification module (M) classifies said calls according to at least one parameter chosen in the group comprising: source site (S1, S2, S3, S4) of the call, called number, internal or external number of the call respect to said corporate telecommunications network.

4. System according to claim 3, **characterised by** the fact that said call classifying module (M) classifies the internal calls over said corporate communications network according to in-site calls and between-site calls.

5. System according to claim 3, **characterised by** the fact that said classifying module (M) classifies external calls over said corporate communications network according to district calls, inter-district calls, international calls or mobile terminal calls.

6. System according to claim 2, for the combined use of a corporate telecommunications network in which said database collects the amount of exchanged bytes in relation to said data Wide Area network calls, **characterised by** the fact that said call value module (N) calculates the cost of calls placed on said data Wide Area network according to the amount of exchanged bytes.

7. System according to claim 1, **characterised by** the fact that said at least one Graphical user interface is configured so that said third configuration data (K) pertaining to billing plans includes at least one configurable parameter for voice calls chosen the in group comprising: day, billing start time, billing end time, rate per unit of time, units.

8. System according to claim 1, **characterised by** the fact that said at least one Graphical user interface is configured so that said third configuration data (K) pertaining to billing plans includes at least one configurable parameter for data calls chosen in the group comprising: list of corporate sites served by said data Wide Area network, rates for transmitting a certain
amount of data from one of said sites to all the others, annual and/or monthly fixed subscriber fee.

9. System according to claim 1, **characterised by** the fact that said Graphical user interface comprises a controlling function for verifying the occurrence of the one of the following events in said third configuration data: no rate value for a specific time window, double rate value definition for a certain time window, presence of a rate value for a certain time window.

10. System according to claim 1, **characterised by** the fact that said Graphical interface is configured to bill inbound calls over said at least one external Public Switched telephone network at zero cost.

11. System according to claim 2, **characterised by** the fact that said value module (N) bills calls over said interface function (A) according to the rate identified by means of said third configuration data (L) and according to the duration of the conversation collected in said database (B).

12. System according to claim 1, **characterised by** the fact that said value module (N) bills calls on said data Wide Area network according to the number of bytes exchanged during the call and according to the corresponding third configuration data generated by said Graphical user interface and pertaining to the source site and to the destination site of said data call.

13. System according to claim 1, **characterised by** the fact that said value module (N) firstly bills said calls by means of said interface function (A) and then bills calls over said data Wide Area network.

14. System according to claim 1 or 13, **characterised by** the fact that said value module (N) with respect to calls placed over said data Wide Area network, first bills between-site calls and then bills in-site calls.

15. System according to claim 1, **characterised by** the fact that said report generating module (O) is configured to generate reports which indicate for each calls at least one parameters chosen in the groups comprising: caller's number, called number, starting time of connection, source IP address, destination IP address, duration, source site, destination site, name of user placing the call, type of call and cost.

16. System according to claim 1, **characterised by** the fact that said report generating module (O) is configured to generate aggregated reports on the basis of at least one typology chosen from the group comprising:
- cost, wherein calls are sorted according to cost providing at least one of the following: caller's name, type of call, duration, cost, caller's name, called number and number of exchanged bytes (the latter for between-site calls);
- duration, wherein calls are sorted according to duration providing at least one of the following: caller's name, type of call, duration, cost, caller's number, called number and number of exchanged bytes (the latter for between-site calls);
- typology, wherein calls are sorted according to typology providing at least one of the following: caller's name, type of call, duration, cost, caller's number, called number and, for between-site calls, number of exchanged bytes;
- traffic, for between-site calls, wherein calls are sorted according to amount of exchanged data providing at least one of the following: caller's name, type of call, duration, cost, caller's number, called number, and number of exchanged bytes; and
- user, wherein calls are sorted according to user providing at least one of the following: caller's name, type of call, duration, cost, caller's number, called number and, for between-site calls, number of exchanged bytes.

17. System according to claim 1, **characterised by** the fact that said report generating module (O) is configured for generating desegregated corporate site specific reports (S1, S2, S3, S4).

18. A corporate telecommunications network located in several sites (S1, S2, S3, S4), **characterised by** the fact that it comprises a system for billing communication costs as claimed in any of the preceding claims.

## Patentansprüche

1. System zur Abrechnung von Kommunikationskosten bezogen auf ein Firmentelekommunikationsnetzwerk, das in mehreren Orten (S1, S2, S3, S4) lokalisiert ist, wobei das Firmennetzwerk Folgendes umfasst:
- eine Schnittstellenfunktion (A) mit zumindest einem externen öffentlichen vermittelten Telekommunikationsnetzwerk,
- ein Datenfernnetz, welches in der Lage ist, Anrufe auf IP-basiertem Modus zu unterstützen und
- eine Datenbank (B) für das Sammeln von Daten (C, D, E), die sich auf Anrufe über die Schnittstellenfunktion (A) und auf Anrufe auf dem Daten-Fernnetzwerk beziehen,
wobei das System dadurch charakterisiert ist, dass es weiter Folgendes umfasst:
- zumindest eine grafische Benutzerschnittstelle zum selektiven Erzeugen von ersten Konfigurationsdaten (J), die zu den Orten (S1, S2, S3, S4) gehören, von zweiten Konfigurationsdaten (K), die zu Nummerierungsplänen für das Absetzen der Anrufe gehören, und von dritten Konfigurationsdaten (L), die sich auf Abrechnungspläne für die Anrufe beziehen; wobei die ersten, zweiten und dritten Konfigurationsdaten sich sowohl auf Sprachanrufe als auch auf Datenanrufe beziehen,
- ein Klassifikationsmodul (M) zum Einteilen der Anrufe nach den Nummerierungsplänen entsprechend den zweiten Konfigurationsdaten (K) gemäß den Orten (S1, S2, S3, S4) betreffenden ersten Konfigurationsdaten (J),
- ein Wertmodul (N) zum Berechnen der Kosten der Anrufe in Abhängigkeit von den zu den dritten Konfigurationsdaten (L) gehörenden Abrechnungsplänen, (J) entsprechend den Orten (S1, S2, S3, S4) und entsprechend zu den Nummerierungsplänen gehörenden zweiten Konfigurationsdaten, und
- ein Berichtserzeugungsmodul (O) zum Erzeugen von zu den Kosten gehörenden Berichten der Kommunikationen, die über das Firmenkommunikationsnetzwerk geführt wurden und durch das Wertmodul (N) bestimmt wurden, wobei die Berichte transparent sich sowohl auf Sprachanrufe als auch auf Datenanrufe beziehen.

2. System nach Anspruch 1, **dadurch gekennzeichnet, dass** es eine entsprechende Datenbank (H) für das Speichern der ersten (J), der zweiten (K) und der dritten (L) Konfigurationsdaten aufweist.

3. System nach Anspruch 1 oder Anspruch 2, **dadurch gekennzeichnet, dass** das Klassifikationsmodul (M) die Anrufe nach zumindest einem Parameter klassifiziert, der aus dem Folgenden ausgewählt ist: Ursprungsort (S1, S2, S3, S4) des Anrufes, angerufene Nummer, interne oder externe Nummer des Anrufs in Bezug auf das Firmentelekommunikationsnetzwerk.

4. System nach Anspruch 3, **dadurch gekennzeichnet, dass** das Anrufklassifikationsmodul (M) die internen Anrufe über das Firmenkommunikationsnetzwerk nach Anrufen innerhalb eines Ortes oder nach Anrufen zwischen Orten klassifiziert.

5. System nach Anspruch 3, **dadurch gekennzeichnet, dass** das Klassifikationsmodul (M) externe Anrufe über das Firmenkommunikationsnetzwerk nach Gebietsnetzanrufen, nach Anrufen zwischen Gebieten, nach internationalen Anrufen und nach Mobilanrufen klassifiziert.

6. System nach Anspruch 2, zur kombinierten Nutzung eines Firmentelekommunikationsnetzwerkes, in welchem die Datenbank den Umfang von ausgetauschten Bytes bezüglich der Daten-Fernnetz-Anrufen sammelt, **dadurch gekennzeichnet, dass** das Anrufwertemodul (N) die Kosten von Anrufen auf dem Fernnetzwerk nach dem Umfang der ausgetauschten Bytes berechnet.

7. System nach Anspruch 1, **dadurch gekennzeichnet, dass** die zumindest eine grafische Benutzerschnittstelle derart konfiguriert ist, das die zu den Abrechnungsplänen gehörenden dritten Konfigurationsdaten (K) zumindest einen konfigurierbaren Parameter für Sprachanrufe enthalten, der ausgewählt ist aus der Gruppe, die Folgendes umfasst: Tag, Abrechnungsstartzeit, Abrechnungsendzeit, Rate pro Zeiteinheit, Einheiten.

8. System nach Anspruch 1, **dadurch gekennzeichnet, dass** die zumindest eine graphische Benutzerschnittstelle derart konfiguriert ist, dass die zu den Abrechnungsplänen gehörenden dritten Konfigurationsdaten zumindest einen konfigurierbaren Parameter für Datenanrufe umfassen, der aus einer Gruppe gewählt ist, die Folgendes umfasst: Liste von Firmenorten, die durch das Fernnetzwerk bedient werden, Raten für das Übertragen einer bestimmten Menge von Daten von einem der Orte zu allen Anderen, jährliche und/oder feste monatliche Grundgebühr.

9. System nach Anspruch 1, **dadurch gekennzeichnet, dass** die graphische Benutzerschnittstelle eine Kontrollfunktion umfasst zum Bestätigen des Auftretens eines der folgenden Ereignisse in den dritten Konfigurationsdaten: keinen Bemessungswert für ein spezifisches Zeitfenster, doppelte Bemessungswertdefinition für ein bestimmtes Zeitfenster, Vorhandensein eines Benessungswertes für ein bestimmtes Zeitfenster.

10. System nach Anspruch 1, **dadurch gekennzeichnet, dass** die graphische Schnittstelle derart konfiguriert ist, dass ankommende Anrufe über das zumindest eine externe öffentliche Telefonnetz kostenfrei sind.

11. System nach Anspruch 2, **dadurch gekennzeichnet, dass** das Wertemodul (N) Anrufe über die Schnittstellenfunktion (A) nach der Rate abrechnet, die durch die dritten Konfigurationsdaten (L) identifiziert sind und nach der Zeitdauer der Konversation, die in der Datenbank (B) verzeichnet ist, abrechnet.

12. System nach Anspruch 1, **dadurch gekennzeichnet, dass** das Wertemodul (N) Anrufe über das Fernnetzwerk nach der Anzahl von ausgetauschten Bytes während des Anrufs und nach den entsprechenden dritten Konfigurationsdaten, die durch die graphische Benutzerschnittstelle erzeugt wurden und zu dem Ursprungsort und dem Zielort der Datenanrufe gehören, abrechnet.

13. System nach Anspruch 1, **dadurch gekennzeichnet, dass** das Wertmodul (N) zunächst Anrufe, die über die Schnittstellenfunktion (A) getätigt werden, abrechnet und dann Anrufe abrechnet, die über das Fernnetzwerk getätigt werden.

14. System nach einem der Ansprüche 1-13, **dadurch gekennzeichnet, dass** das Wertemodul (N) in Bezug auf Anrufe, die über das Fernnetzwerk getätigt werden, zunächst Anrufe zwischen den Orten abrechnet und dann Anrufe innerhalb eines Ortes abrechnet.

15. System nach Anspruch 1, **dadurch gekennzeichnet, dass** das Berichtserzeugungsmodul (O) ausgebildet ist, um Berichte zu erzeugen, die für jeden Anruf zumindest einen Parameter anzeigen, wobei der Parameter aus der Gruppe, die Folgendes umfasst, ausgewählt ist: Anrufernummer, angerufenen Nummer, Anfangszeit der Verbindung, Quell-IP-Adresse, Ziel-IP-Adresse, Dauer, Ursprungsort, Zielort, Name des Nutzers, der den Anruf tätigt, Art des Anrufes und Kosten.

16. System nach Anspruch 1, **dadurch gekennzeichnet, dass** das Berichtserzeugungsmodul (O) ausgebildet ist, um Sammelberichte auf der Basis von zumindest einer Typologie zu erstellen, die gewählt ist aus einer Gruppe, die Folgendes umfasst:
- Kosten, wobei Anrufe nach den Kosten sortiert werden, wobei zumindest eines aus den Folgenden bereitgestellt wird: Anrufername, Art des Anrufes, Dauer, Kosten, Anrufername, angerufene Nummer und Anzahl der ausgetauschten Bytes (Letzteres für Anrufe zwischen Orten),
- Dauer, wobei Anrufe nach der Zeitdauer gespeichert werden, die zumindest eines aus dem Folgenden bereitstellen: Anrufername, Art des Anrufes, Dauer, Kosten, angerufener Name, angerufene Nummer und Anzahl der ausgetauschten Bytes (Letzteres für Anrufe zwischen Orten);
- Typologie, wobei Anrufe sortiert werden nach der Typologie und zumindest eines aus dem Folgenden bereitstellen: Anrufername, Art des Anrufes, Dauer, Kosten, angerufene Nummer, Anrufernummer und für Zwischenortanrufen die Anzahl der ausgetauschten Bytes;
- Traffic für Zwischenortanrufe, wobei Anrufe nach der Menge der ausgetauschten Daten sortiert werden und zumindest eines aus dem Folgenden bereitgestellt wird: Anrufername, Art des Anrufs, Dauer, Kosten, Anrufernummer, angerufene Nummer und Anzahl der ausgetauschten Bytes; und
- Benutzer, wobei Anrufe nach dem Benutzer sortiert werden, wobei zumindest eines aus dem Folgenden bereitgestellt wird: Anrufername, Art des Anrufes, Dauer, Kosten, Anrufernummer, angerufene Nummer und für Zwischenortanrufe die Anzahl der ausgetauschten Bytes.

17. System nach Anspruch 1, **dadurch gekennzeichnet, dass** das Berichtserzeugungsmodul (O) ausgebildet ist, um spezifische Berichte (S1, S2, S3, S4), die Firmenorte nicht diskriminieren, zu erzeugen.

18. Ein Firmentelekommunikationsnetzwerk, welches an verschiedenen Orten (S1, S2, S3, S4) lokalisiert ist, **dadurch gekennzeichnet, dass** es ein System zum Abrechnen von Kommunikationskosten nach einem der vorhergehenden Ansprüche umfasst.

## Revendications

1. Système de facturation de coûts de communication relatifs à un réseau de télécommunications d'entreprise situé dans une pluralité de sites (S1, S2, S3, S4), ledit réseau d'entreprise comprenant :
- une fonction d'interface (A) avec au moins un réseau téléphonique public commuté externe ;
- un réseau étendu de transmission de données capable de supporter des appels vocaux en mode basé sur l'IP, et
- une base de données (B) pour recueillir des données (C, D, E) relatives à des appels via ladite fonction d'interface (A) et des appels sur ledit réseau étendu de transmission de données ,
le système étant **caractérisé en ce qu'**il comprend :
- au moins une interface utilisateur graphique pour produire sélectivement des premières données de configuration (J) concernant lesdits sites (S1, S2, S3, S4), des deuxièmes données de configuration (K) concernant des plans de numérotation pour placer lesdits appels, et des troisièmes données de configuration (L) concernant des plans de facturation pour lesdits appels ; lesdites premières, deuxièmes et troisièmes données de configuration concernant à la fois des appels vocaux et des appels de transmission de données,
- un module de classification (M) pour diviser les appels en fonction de plans de numérotation correspondants auxdites deuxièmes données de configuration (K) en fonction desdites premières données de configuration (J) concernant lesdits sites (S1, S2, S3, S4),
- un module de valeurs (N) pour calculer les coûts desdits appels en référence aux plans de facturation correspondant auxdites troisièmes données de configuration (L), (J) concernant lesdits sites (S1, S2, S3, S4) et auxdites deuxièmes données de configuration concernant lesdits plans de numérotation, et
- un module de génération de rapport (O) pour générer des rapports concernant des coûts de communications, effectuées sur ledit réseau de télécommunications d'entreprise, déterminés par ledit module de valeurs (N), lesdits rapports se référant de manière transparente à la fois aux appels vocaux et aux appels de transmission de données.

2. Système selon la revendication 1, **caractérisé en ce qu'**il comprend une base de données respective (H) pour stocker lesdites premières (J), deuxièmes (K) et troisièmes (L) données de configuration.

3. Système selon la revendication 1 ou 2, **caractérisé en ce que** ledit module de classification (M) classe lesdits appels en fonction d'au moins un paramètre sélectionné dans le groupe comprenant : un site source (S1, S2, S3, S4) de l'appel, un numéro appelé, un numéro interne ou externe de l'appel par rapport audit réseau de télécommunications d'entreprise.

4. Système selon la revendication 3, **caractérisé en ce que** ledit module de classification d'appels (M) classe des appels internes sur ledit réseau de communications d'entreprise suivant des appels à l'intérieur du site et des appels entre sites.

5. Système selon la revendication 3, **caractérisé en ce que** ledit module de classification (M) classe des appels externes sur ledit réseau de téléommunications d'entreprise suivant des appels locaux, des appels nationaux, des appels internationaux ou des appels de terminaux mobiles.

6. Système selon la revendication 2, pour l'utilisation combinée d'un réseau de télécommunications d'entreprise dans lequel ladite base de données recueille la quantité d'octets échangés en relation avec lesdits appels de réseau étendu de transmission de données, **caractérisé en ce que** ledit module de valeurs d'appels (N) calcule le coût d'appels effectués sur ledit réseau étendu de transmission de données en fonction de la quantité d'octets échangés.

7. Système selon la revendication 1, **caractérisé en ce que** ladite au moins une interface utilisateur graphique est configurée de manière que lesdites troisièmes données de configuration (K) concernant des plans de facturation comprennent au moins un paramètre configurable pour des appels vocaux sélectionné dans le groupe comprenant : le jour, le temps de début de facturation, le temps de fin de facturation, le prix par unité de temps, les unités.

8. Système selon la revendication 1, **caractérisé en ce que** ladite au moins une interface utilisateur graphique est configurée de manière que lesdites troisièmes données de configuration (K) concernant des plans de facturation comprennent au moins un paramètre configurable pour des appels de transmission de données sélectionné dans le groupe comprenant : la liste de sites d'entreprise desservis par ledit réseau étendu de transmission de données, les tarifs pour transmettre une certaine quantité de données d'un desdits sites à tous les autres, les frais d'abonnement fixe annuel et/ou mensuel.

9. Système selon la revendication 1, **caractérisé en ce que** ladite interface utilisateur graphique comprend une fonction de contrôle pour vérifier l'apparition de l'un des événements suivants dans lesdites troisièmes données de configuration : aucune valeur de tarif pour un intervalle de temps spécifique, une double définition de valeur de tarif pour un certain intervalle de temps, la présence d'une valeur de tarif pour un certain intervalle de temps.

10. Système selon la revendication 1, **caractérisé en ce que** ladite interface graphique est configurée pour facturer des appels entrants sur ledit au moins un réseau téléphonique public commuté externe à un coût nul.

11. Système selon la revendication 2, **caractérisé en ce que** ledit module de valeurs (N) facture des appels sur ladite fonction d'interface (A) en fonction du tarif identifié au moyen desdites troisièmes données de configuration (L) et en fonction de la durée de la conversation recueillie dans ladite base de données (B).

12. Système selon la revendication 1, **caractérisé en ce que** ledit module de valeurs (N) facture des appels sur ledit réseau étendu de transmission de données en fonction du nombre d'octets échangés durant l'appel et en fonction des troisièmes données de configuration correspondantes générées par ladite interface utilisateur graphique et concernant le site source et le site de destination dudit appel de transmission de données.

13. Système selon la revendication 1, **caractérisé en ce que** ledit module de valeurs (N) facture en premier lesdits appels au moyen de ladite fonction d'interface (A) et facture ensuite des appels sur ledit réseau étendu de transmission de données.

14. Système selon la revendication 1 ou 13, **caractérisé en ce que** ledit module de valeurs (N), pour des appels effectués sur ledit réseau étendu de transmission de données, facture d'abord des appels entre sites et facture ensuite des appels à l'intérieur du site.

15. Système selon la revendication 1, **caractérisé en ce que** ledit module de génération de rapports (O) est configuré pour générer des rapports qui indiquent pour chaque appel au moins un paramètre sélectionné dans le groupe comprenant : le numéro de l'appelant, le numéro appelé, le temps de début de connexion, l'adresse IP source, l'adresse IP de destination, le durée, le site source, le site de destination, le nom d'utilisateur effectuant l'appel, le type d'appel et le coût.

16. Système selon la revendication 1, **caractérisé en ce que** ledit module de génération de rapports (O) est configuré pour générer des rapports agrégés sur la base d'au moins une typologie sélectionnée dans le groupe comprenant :
- le coût, où des appels sont triés en fonction du coût en fournissant au moins un des éléments suivants : le nom de l'appelant, le type d'appel, la durée, le coût, le nom de l'appelant, le numéro appelé et le nombre d'octets échangés (ce dernier pour des appels entre sites) ;
- la durée, où des appels sont triés en fonction de la durée en fournissant au moins un des éléments suivants : le nom de l'appelant, le type d'appel, la durée, le coût, le numéro de l'appelant, le numéro appelé et le nombre d'octets échangés (ce dernier pour des appels entre sites) ;
- la typologie, où des appels sont triés en fonction de la typologie en fournissant au moins un des éléments suivants : le nom de l'appelant, le type d'appel, la durée, le coût, le numéro de l'appelant, le numéro appelé et, pour des appels entre site, le nombre d'octets échangés ;
- le trafic, pour des appels entre sites, où des appels sont triés en fonction de la quantité de données échangées en fournissant au moins un des éléments suivants : le nom de l'appelant, le type d'appel, la durée, le coût, le numéro de l'appelant, le numéro appelé et le nombre d'octets échangés ; et
- l'utilisateur, où des appels sont triés en fonction de l'utilisateur en fournissant au moins un des éléments suivants : le nom de l'appelant, le type d'appel, la durée, le coût, le numéro de l'appelant, le numéro appelé et, pour des appels entre site, le nombre d'octets échangés.

17. Système selon la revendication 1, **caractérisé en ce que** ledit module de génération de rapports (O) est configuré pour générer des rapports non agrégés spécifiques aux sites d'entreprise (S1, S2, S3, S4).

18. Réseau de télécommunications d'entreprise situé dans une pluralité de sites (S1, S2, S3, S4), **caractérisé en ce qu'**il comprend un système de facturation de coûts de communication selon l'une quelconque des revendications précédentes.
